# EUROPÄISCHE PATENTSCHRIFT

(11) **EP 2 802 855 B1**
(45) Veröffentlichungstag und Bekanntmachung des Hinweises auf die Patenterteilung: **07.10.2015**
(21) Anmeldenummer: 12823132.1
(22) Anmeldetag: 06.12.2012
(51) Int. Cl.: G01M 13/00

(54) **VERFAHREN UND EINRICHTUNG ZUR MESSUNG DER LICHTSPALTDICHTIGKEIT VON KOLBENRINGEN**
METHOD AND DEVICE FOR MEASURING THE LIGHT GAP TIGHTNESS OF PISTON RINGS
PROCÉDÉ ET DISPOSITIF PERMETTANT DE MESURER L'ÉTANCHÉITÉ À LA LUMIÈRE DE SEGMENTS DE PISTON

(30) Priorität: 11.01.2012 DE 102012000332
(43) Veröffentlichungstag der Anmeldung: 19.11.2014
(73) Patentinhaber: Federal-Mogul Burscheid GmbH, 51399 Burscheid (DE)
(72) Erfinder: BRESINSKI, Sebastian, 40764 Langenfeld (DE); KELLNER, Markus, 51375 Leverkusen (DE); PICARD, Jens, 42329 Wuppertal (DE)
(74) Vertreter: Döpp, Ludger
(86) Internationale Anmeldenummer: PCT/DE2012/001171
(87) Internationale Veröffentlichungsnummer: WO 2013/104348

(56) Entgegenhaltungen:
- CN-Y- 201 348 498
- GB-A- 1 504 974
- US-A- 2 487 628

## Beschreibung

Die Erfindung betrifft ein Verfahren zur Messung der Lichtspaltdichtigkeit eines mit einem Stoß versehenen unrund erzeugten Kolbenrings gemäß gattungsbildendem Teil des ersten Patentanspruchs.

Die DD 148 982 B offenbart eine Messanordnung zur Bestimmung unzulässiger Spalte zwischen rotaionssymmetrischen Bauteilen, insbesondere zur Dichtspaltprüfung von Kolbenringen, unter Anwendung von Lichtquelle und Fotoempfänger. Der zu prüfende Kolbenring wird in einen Lehrring eingespannt und eine Impulslichtquelle wird unter Zwischenschaltung eines Linsensystems mit ihrer optischen Achse auf den Spalt zwischen Kolbenring und Lehrring gerichtet, wobei entgegengesetzt des Spaltes in der optischen Achse ein Prüfempfänger angeordnet ist, dessen vom Spaltmaß abhängiges analoges elektrisches Signal einem Selektivverstärker zugeführt wird, wobei mittels einer bekannten elektronischen Schaltung die im Verlauf einer Umdrehung des Lehrringes erfassten analogen elektrischen Signale umfangsbezogen abrufbar, speicherbar und anzeigbar sind.

Durch die DE 100 30 368 A1 ist ein Verfahren zur Ermittlung des Formfüllvermögens von Kolbenringen in einer unrund ausgebildeten Zylinderlaufbüchse bekannt geworden. Dazu wird eine formstabile Testbüchse bereit gestellt und in einem Formprüfgerät aufgenommen. Die Testbüchse ist an ihrer Innenfläche mit einem exakt kreiszylindrischen Abschnitt entsprechend dem Nenndurchmesser des Kolbenrings und axial anschließend mit einem leicht unrund ausgebildeten Abschnitt mit vier bogenförmigen Ausbauchungen von etwa 20 µm versehen. Die von einem einbeschreibbaren Kreis und von den Ausbauchungen eingeschlossene Querschnittsfläche wird als Referenzfläche verwendet. Durch konventionelle Formmessung des in den unrunden Testbüchsenabschnitt eingelegten Kolbenrings wird der Profilverlauf der Innenfläche des Kolbenrings über dem unrunden Abschnittumfang ermittelt.

Der US 2,487,628 ist eine Messeinrichtung für Kolbenringe oder dergleichen zu entnehmen. Durch die Messeinrichtung soll die Lichtspaltdichtigkeit eines mit einem Stoß versehenen, unrund erzeugten, Kolbenrings überprüft werden, indem der offene Kolbenring unter weitestgehender Schließung des Stoßes über ein Hilfsmittel in Umfangsrichtung gespannt und die Lichtspaltdichtigkeit durch optische Mittel festgestellt wird.

Die CN 2013-48498 Y offenbart eine Einrichtung zur Messung der Lichtspaltdichtigkeit eines mit einem Stoß versehenen Kolbenrings. Auch hier wird der Kolbenring unter weitestgehender Schließung des Stoßes über ein Hilfsmittel in Umfangsrichtung gespannt, wobei die Lichtspaltdichtigkeit optoelektronisch überprüft wird.

Bei der Herstellung von Kolbenringen muss zur Aufrechterhaltung einer Lichtspaltdichtigkeit im Betriebszustand ein hohes Fertigungspotenzial vorgehalten werden, was mit nicht unerheblichen Kosten einhergeht. Auch die auf hohem Fertigungsniveau erzeugten Kolbenringe müssen zumindest gelegentlich einer Lichtspaltdichtigkeitsprüfung unterzogen werden, um auf diese Art und Weise festzustellen, inwieweit sich unzulässige Toleranzen im Fertigungsprozess eingestellt haben.

Der Erfindung liegt die Aufgabe zugrunde auch bei Akzeptanz größerer Fertigungstoleranzen bei der Herstellung von Kolbenringen ein Verfahren bereit zu stellen, mit welchem überprüft werden kann, ob ein Kolbenring noch für den Betrieb geeignet ist, oder aber als Ausschuss bewertet werden muss. Darüber hinaus soll eine nach dem Verfahren arbeitende einfach bauende Einrichtung bereitgestellt werden.

Dieses Ziel wird dadurch erreicht, dass im Bereich mindestens eines der Stoßenden des Kolbenrings eine definierte Kraft radial von innen in Richtung einer Wand des Hilfsmittels ausgeübt wird, wobei unter Einsatz der optischen Mittel festgestellt wird, ob der der Krafteinwirkung unterzogene Stoßbereich des Kolbenrings an der Wand des Hilfsmittels lichtspaltdicht anliegt, wobei der jeweilige Stoßbereich mit einer Kraft von 0,5 bis 50 N an die Wand des insbesondere als Kontrollring ausgebildeten Hilfsmittels angedrückt wird.

Vorteilhafte Weiterbildungen des erfindungsgemäßen Verfahrens sind den zugehörigen verfahrensgemäßen Unteransprüchen zu entnehmen.

Eine nach diesem Verfahren arbeitende Einrichtung ist dadurch gekennzeichnet, dass das Hilfsmittel ein den Kolbenring umgreifender Kontrollring ist, und dass radial innerhalb des Kontrollrings eine zumindest in Richtung des Kontrollrings zustellbare Rolle positioniert ist und, dass ein optisches Überwachungssystem zum Einsatz gelangt, das zumindest einen definierten Umfangsabschnitt des mindestens einen Stoßendes in Relation zur umgebenden Wand des Kontrollrings abtastet.

Eine nach diesem Verfahren arbeitende alternative Einrichtung ist dadurch gekennzeichnet, dass das Hilfsmittel ein den Kolbenring umgreifender Kontrollring ist, und dass innerhalb des Kolbenrings ein starrer Körper, beinhaltend zwei auf die Stoßenden gerichtete Druckelemente radial in Richtung der Stoßenden zustellbar ist und, dass ein optisches Überwachungssystem zum Einsatz gelangt, das zumindest einen definierten Umfangsabschnitt des mindestens einen Stoßendes in Relation zur umgebenden Wand des Kontrollrings abtastet.

Durch das erfindungsgemäße Verfahren sowie die alternativen danach arbeitenden Einrichtungen kann nun festgestellt werden, ob ein unter größerer Toleranzen hergestellter Kolbenring dennoch so lichtspaltdicht ausgeführt ist, dass er für den Betriebszustand in einem Motor noch geeignet ist.

Die Krafteinwirkung auf das jeweilige Stoßende erfolgt vorteilhafterweise radial von innen.

Einem weiteren Gedanken der Erfindung gemäß wird der jeweilige Stoßbereich mit einer Kraft zwischen 0,5 und 50 N an die Wand des insbesondere als Kontrollring ausgebildeten Hilfsmittels angedrückt.

Die Höhe der Kraft ist hierbei abhängig vom Durchmesser, dem Material des Kolbenrings und der radialen Wandstärke des zu messenden Kolbenrings.

Das erfindungsgemäße Verfahren kann bedarfsweise in das ohnehin nachträglich stattfindende gelegentliche Lichtspaltprüfen von Kolben ohne größeren Aufwand integriert werden.

Technisch sind mehrere Ausführungsformen zur Überprüfung der Lichtspaltdichtigkeit eines Kolbenrings gegeben, die im Folgenden wiedergegeben werden:
- Rolle(n), die bedarfsweise rotierbar, auf ein oder beide Stoßenden zustellbar ist,
- starre(r), mit Druckelementen versehene(r) Körper, der/die in Richtung der beiden Stoßenden zustellbar ist/sind.

Der Fachmann wird in Abhängigkeit vom Anwendungsfall die konstruktiv einfachste und auch wirtschaftlichste Lösung bereitstellen.

In Analogie zum Stand der Technik gemäß DD 148 982 B2 kann auch beim erfindungsgemäßen Verfahren eine optische Quelle etwa 90° zum eingespannten Kolbenring vorgesehen werden, die mit einem Lichtempfangsgerät in Wirkverbindung steht.

Der Erfindungsgegenstand ist anhand eines Ausführungsbeispiels in der Zeichnung dargestellt und wird wie folgt beschrieben: Es zeigen:
- Figuren 1 und 2: Prinzipskizzen einer Einrichtung zur Lichtspaltdichtigkeitsmessung von Kolbenringen;
- Figur 3: Alternative Einrichtung zur Messung der Lichtspaltdichtigkeit an Kolbenringen.

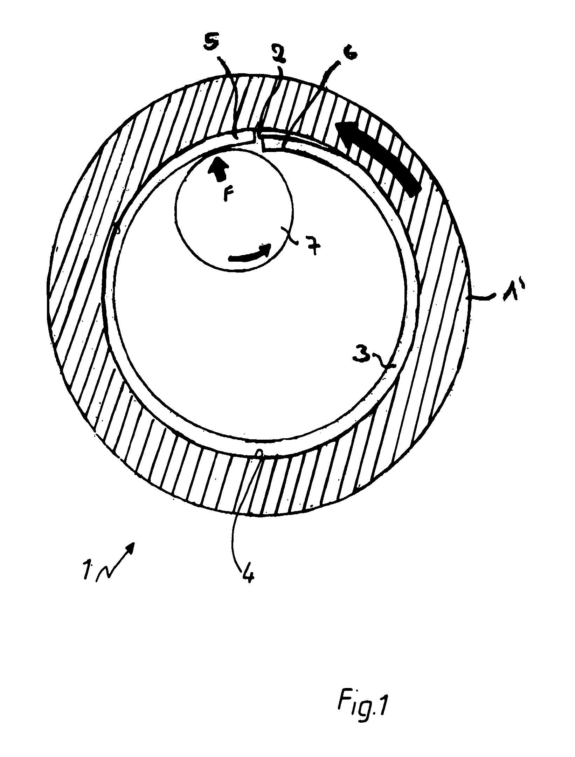

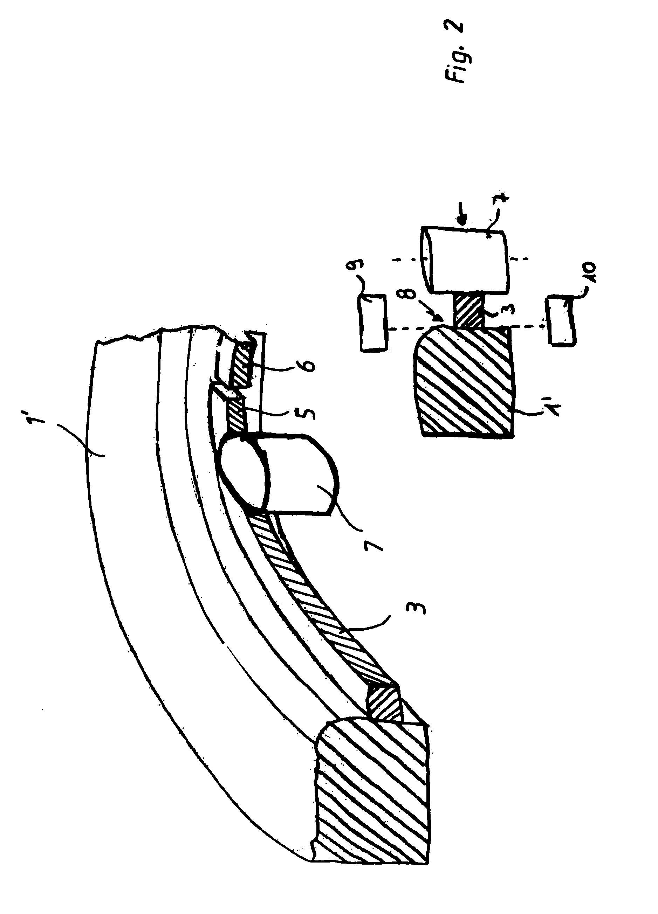

Die Figuren 1 und 2 zeigen als vereinfachte Prinzipskizzen eine Einrichtung 1 zur Messung der Lichtspaltdichtigkeit eines mit einem Stoß 2 versehenen Kolbenrings 3. Die Einrichtung 1 beinhaltet ein Hilfsmittel 1' in Form eines Kontrollrings, der eine zylindrische Innenumfangsfläche 4 aufweist. Zur besseren Veranschaulichung des Erfindungsgegenstandes ist das eine Stoßende 5 des Kolbenrings 3 radial nach innen abgebogen. Dies soll zur Veranschaulichung des Erfindungsgegenstandes auch für das andere Stoßende 6 des Kolbenrings 3 gelten. Hier kommt jedoch eine Rolle 7 zum Einsatz, die bedarfsweise rotierbar, in Umfangsrichtung bewegbar und in jedem Fall radial in Richtung des Stoßendes 6 zustellbar ist. Unter Aufwendung einer definierten Kraft, in diesem Beispiel 2 N, wird das Stoßende 6 des Kolbenrings 3 an die zylindrische Umfangsfläche 4 des Kontrollrings 1' angedrückt. Kann durch Aufwendung der definierten Kraft F der undichte Stoßbereich 5,6 wieder an die innere Umfangsfläche 4 des Kontrollrings 1' angedrückt werden, wird eine Lichtspaltdichtheit herbeigeführt und der Kolbenring 3 ist für den Betriebszustand geeignet.

In Figur 2 ist in verallgemeinerter Form noch die optische Messeinrichtung dargestellt, bestehend aus einer in Richtung eines möglichen Spalts 8 gerichteten lichtemittierenden Lichtquelle 9 sowie einem lichtempfindlichen Bauteil 10, wie beispielsweise einen Fotoempfänger.

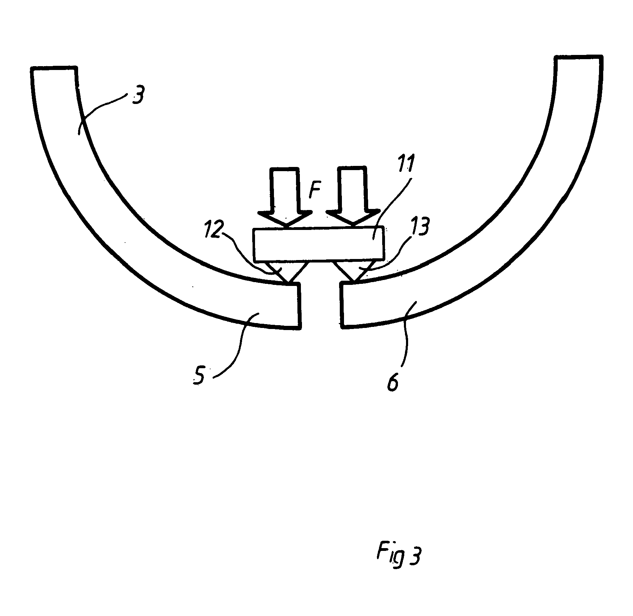

Figur 3 zeigt eine Alternative zu Figur 1. Der in Figur 1 dargestellte Kontrollring 1 ist hier nicht erkennbar. In diesem Beispiel wirkt ein starrer Körper 11, beinhaltend zwei Druckelemente 12,13 auf die Stoßenden 5,6 des Kolbenrings 3 ein. Die Stoßenden 5,6 werden gleichzeitig an die Wand des umgebenden Kontrollrings gedrückt. Die Druckelemente 12,13 übernehmen hierbei die Funktion der in den Figuren 1 und 2 dargestellten Rolle 7, wobei die Wirksamkeit in beiden Fällen die gleiche ist.

## Patentansprüche

1. Verfahren zur Messung der Lichtspaltdichtigkeit eines mit einem Stoß (2) versehenen unrund erzeugten Kolbenrings (3), indem der offene Kolbenring (3) unter weitestgehender Schließung des Stoßes (2) über ein Hilfsmittel (1') in Umfangsrichtung gespannt und die Lichtspaltdichtigkeit durch optische Mittel (9,10) festgestellt wird, **dadurch gekennzeichnet, dass** im Bereich mindestens eines der Stoßenden (5,6) des Kolbenrings (3) eine definierte Kraft (F) radial von innen in Richtung einer Wand (4) des Hilfsmittels (1') ausgeübt wird, wobei unter Einsatz der optischen Mittel (9,10) festgestellt wird, ob der der Krafteinwirkung (F) unterzogene Stoßbereich (5,6) des Kolbenrings (3) an der Wand (4) des Hilfsmittels (1') lichtspaltdicht anliegt, wobei der jeweilige Stoßbereich (5,6) mit einer Kraft (F) von 0,5 bis 50 N an die Wand (4) des insbesondere als Kontrollring ausgebildeten Hilfsmittels (1') angedrückt wird.

2. Verfahren nach Anspruch 1, **dadurch gekennzeichnet, dass** die Kraft (F) durch mindestens eine, bedarfsweise rotierbare, in Richtung des jeweiligen Stoßbereichs (5,6) radial zustellbare Rolle (7) ausgeübt wird.

3. Verfahren nach Anspruch 1 oder 2, **dadurch gekennzeichnet, dass** jeweils eine Rolle (7) auf ein zugehöriges Stoßende (5,6) einwirkt.

4. Verfahren nach Anspruch 1, **dadurch gekennzeichnet, dass** ein starrer Körper (11), beinhaltend zwei auf das jeweilige Stoßende (5,6) einwirkende Druckelemente (12,13) in Richtung der Stoßenden (5,6) radial zustellbar ist.

5. Einrichtung zur Durchführung des Verfahrens nach einem der Ansprüche 1 bis 4, **dadurch gekennzeichnet, dass** das Hilfsmittel (1') ein den Kolbenring (3) umgreifender Kontrollring ist, und dass radial innerhalb des Kontrollrings (1') eine zumindest in Richtung des Kontrollrings (1') zustellbare Rolle (7) positioniert ist und, dass ein optisches Überwachungssystem (9,10) zum Einsatz gelangt, das zumindest einen definierten Umfangsabschnitt des mindestens einen Stoßendes (5,6) in Relation zur umgebenden Wand (4) des Kontrollrings (1') abtastet.

6. Einrichtung zur Durchführung des Verfahrens nach einem der Ansprüche 1 bis 4, **dadurch gekennzeichnet, dass** das Hilfsmittel (1') ein den Kolbenring (3) umgreifender Kontrollring ist, und dass innerhalb des Kolbenrings (1') ein starrer Körper (11), beinhaltend zwei auf die Stoßenden (5,6) gerichtete Druckelemente (12,13) radial in Richtung der Stoßenden (5,6) zustellbar ist und, dass ein optisches Überwachungssystem (9,10) zum Einsatz gelangt, das zumindest einen definierten Umfangsabschnitt des mindestens einen Stoßendes (5,6) in Relation zur umgebenden Wand (4) des Kontrollrings (1') abtastet.

## Claims

1. A method for measuring the light gap tightness of a piston ring (3) provided with a joint (2) and manufactured with a non-round design, in that the open piston ring (3) will be tensioned in the circumferential direction using an auxiliary means (1') while almost closing the joint (2) and the light gap tightness will be determined by optical means (9, 10), **characterized in that** in the area of at least one of the joint ends (5, 6) of the piston ring (3) a defined force (F) will be exerted radially from inside in the direction of a wall (4) of the auxiliary means (1'), wherein it will be determined using the optical means (9, 10), whether the joint area (5, 6) of the piston ring (3) which is subjected to the exerted force (F) rests in a light gap tight manner on the wall (4) of the auxiliary means (1'), wherein the respective joint area (5, 6) is pressed against the wall (4) of the auxiliary means (1'), which is in particular designed as a control ring, with a force (F) comprised between 0.5 and 50 N.

2. A method according to claim 1, **characterized in that** the force (F) is exerted by at least one roller (7) which can be optionally rotated and radially displaced in the direction of the respective joint area (5, 6).

3. A method according to claim 1 or 2, **characterized in that** respectively one roller (7) acts upon an associated joint end (5, 6).

4. A method according to claim 1, **characterized in that** a rigid body (11) comprising two pressure elements (12, 13) which act upon the respective joint end (5, 6) can be radially displaced in the direction of the joint ends (5, 6).

5. A device for carrying out the method according to one of the claims 1 through 4, **characterized in that** the auxiliary means (1') is a control ring which encompasses the piston ring (3), and that a roller (7), which can be displaced at least in the direction of the control ring (1'), is radially positioned inside the piston ring (3), and that an optical monitoring system (9, 10) is used, which at least scans one defined circumferential section of the at least one joint end (5, 6) in relation to the surrounding wall (4) of the control ring (1').

6. A device for carrying out the method according to one of the claims 1 through 4, **characterized in that** the auxiliary means (1') is a control ring which encompasses the piston ring (3), and that a rigid body (11) arranged inside the piston ring (3) and comprising two pressure elements (12, 13) directed towards the joint ends (5, 6) can be radially displaced in the direction of the joint ends (5, 6), and that an optical monitoring system (9, 10) is used, which at least scans one defined circumferential section of the at least one joint end (5, 6) in relation to the surrounding wall (4) of the control ring (1').

## Revendications

1. Procédé destiné à mesurer l'étanchéité aux fentes de lumière d'un segment de piston (3) muni d'une coupe (2) et fabriqué sous forme non ronde, en ce que le segment de piston (3) ouvert est tendu dans la direction circonférentielle à l'aide d'un moyen auxiliaire (1') en fermant le plus que possible la coupe (2), et l'étanchéité aux fentes de lumière est déterminée par des moyens optiques (9, 10), **caractérisé en ce que** dans la zone d'au moins une des extrémités de coupe (5, 6) du segment de piston (3) une force (F) définie est exercée radialement à partir de l'intérieur dans la direction d'une paroi (4) du moyen auxiliaire (1'), et il est déterminé en utilisant les moyens optiques (9, 10), si la zone de coupe (5, 6) du segment de piston (3), laquelle est soumise à la force exercée (F), est adjacente à la paroi (4) du moyen auxiliaire (1') de manière étanche par rapport aux fentes de lumière, la zone de coupe (5, 6) respective étant pressée contre la paroi (4) du moyen auxiliaire (1'), qui est notamment configuré comme un anneau de contrôle, avec une force (F) comprise entre 0,5 et 50 N.

2. Procédé selon la revendication 1, **caractérisé en ce que** la force (F) est exercée par au moins un rouleau (7) qui peut, le cas échéant, être tourné et radialement déplacé dans la direction de la zone de coupe respective (5, 6).

3. Procédé selon la revendication 1 ou la revendication 2, **caractérisé en ce que** respectivement un rouleau (7) agit sur une extrémité de coupe (5, 6) associée.

4. Procédé selon la revendication 1, **caractérisé en ce qu'**un corps rigide (11) comprenant deux éléments de pression (12, 13) qui agissent sur l'extrémité de coupe respective (5, 6) peut être déplacé radialement dans la direction des extrémités de coupe (5, 6).

5. Dispositif destiné à exécuter le procédé selon l'une des revendications 1 à 4, **caractérisé en ce que** le moyen auxiliaire (1') est un anneau de contrôle qui entoure le segment de piston (3), et qu'un rouleau (7), qui peut être déplacé au moins dans la direction de l'anneau de contrôle (1'), est positionné radialement à l'intérieur du segment de piston (3) et qu'un système de surveillance optique (9, 10) est utilisé, qui balaye au moins une partie circonférentielle définie de l'au moins une extrémité de coupe (5, 6) en relation avec la paroi entourant (4) de l'anneau de contrôle (1').

6. Dispositif destiné à exécuter le procédé selon l'une des revendications 1 à 4, **caractérisé en ce que** le moyen auxiliaire (1') est un anneau de contrôle qui entoure le segment de piston (3), et qu'un corps rigide (11) disposé à l'intérieur du segment de piston (3) et comprenant deux éléments de pression (12, 13) dirigés vers les extrémités de coupe (5, 6) peut être déplacé radialement dans la direction des extrémités de coupe (5, 6), et qu'un système de surveillance optique (9, 10) est utilisé, qui balaye au moins une partie circonférentielle définie de l'au moins une extrémité de coupe (5, 6) en relation avec la paroi entourant (4) de l'anneau de contrôle (1').
